# EUROPEAN PATENT APPLICATION

(11) **EP 2 755 397 A1**
(43) Date of publication of application: **16.07.2014**
(21) Application number: 13199516.9
(22) Date of filing: 24.12.2013
(51) Int. Cl.: H04N 21/258, H04N 21/41, H04N 21/436, H04N 21/45, H04N 21/475

(54) **Control method, device, and system based on user personal account**

(30) Priority: 10.01.2013 KR 20130002969
(71) Applicant: Humax Co., Ltd., Seongnam-si, Gyeonggi-do 463-825 (KR)
(72) Inventor: Park, Sung Heum, 446-579 Yongin-si (KR)
(74) Representative: Zardi, Marco

(57) **Abstract**

A control method based on a user personal account may include receiving a first control message, including first user personal account information and first control information, from a first terminal, logging in to a first user personal account corresponding to the first user personal account information based on the first user personal account information included in the first control message, and performing an operation corresponding to the first control information based on predetermined first user service policy information associated with the first user personal account. Accordingly, the operation of a device, such as a smart TV or IPTV set-top box capable of providing family profile service for the members of a family, such as a home, can be easily controlled without additional login and logout processes by a user based on an individual user personal account using a remote controller or a wir having a remote controller function.

## Description

Priority to Korean patent application number 2013-0002969 filed on January 10, 2013, the entire disclosure of which is incorporated by reference herein, is claimed.

### BACKGROUND OF THE INVENTION

### Field of the Invention

The present invention relates to a control method, device, and system based on a user personal account and, more particularly, to technology in which service based on multiple profiles, such as in smart TV and IPTV, can be controlled based on a user personal account without a manual login or logout procedure by a user.

### Discussion of the Related Art

Recently, as network infrastructure for ultrahigh-speed data communication and various types of services are provided based on the network infrastructure, Internet Protocol TV (IPTV) that provide information service, video content, and broadcasting based on ultrahigh-speed Internet becomes widely popular.

If a set-top box for accessing the Internet and a TV receiver operating in conjunction with the set-top box have only to be provided, everyone can easily use IPTV according to a common TV manipulation method. IPTV is similar to common cable broadcasting or satellite broadcasting in that it provides video and broadcasting content, but is characterized in that bi-directivity is added to IPTV. Accordingly, even a person who is not accustomed to a computer can easily perform Internet searches and can receive various types of content and supplementary service provided through the Internet, such as watching movies, home shopping, home banking, online game, and listening to music, using a remote controller. As smart TV equipped with a smart function recently appears, more various types of service are provided.

IPTV is commonly used by the members of a family in a home, and thus a service account for IPTV is managed through a family account. In order to provide different services according to the members of a home, there is proposed the management of multiple profiles in which an access account for IPTV service is managed according to each member of a family, that is, each user.

Such multiple profile management can provide personalized service so that a personal configuration, a program watch range, a user interface form, and an information display range of an Electronic Program Guide (EPG) can be controlled in various ways depending on who is a current viewer, for example, even in one IPTV.

In the prior art, in order to log in to IPTV service using the personal account of a user, the user needs to select On Screen Display (OSD) in an IPTV screen and enter PIN code. After using the IPTV service, the user needs to log out in order to protect his information. In this case, there is a problem in that a complicated procedure for login or logout using a personal account is necessary.

In order to reduce such user efforts, devices that provide solutions capable of logging in to personal accounts through face recognition or fingerprint recognition recently appear. However, the devices for the solutions are expensive, frequently erroneous in recognition, and thus not sufficient to solve the problem.

### [Prior Art Document]

### [Patent Document]

(Patent Document 1) Korean Patent Laid-Open Publication No. 2009-0044758

### Summary of the Invention

An object of the present invention is to provide a control method, device, and system based on a user personal account, which can easily control the operation of a device, such as smart TV or IPTV, based on the personal account of a user.

In accordance with an aspect of the present invention, the present invention provides a control method based on a user personal account. The control method includes receiving a first control message, including first user personal account information and first control information, from a first terminal, logging in to a first user personal account corresponding to the first user personal account information based on the first user personal account information included in the first control message, and performing an operation corresponding to the first control information based on predetermined first user service policy information associated with the first user personal account.

The first user personal account information may include Identification information for identifying the first user personal account and authentication information for authenticating the first user personal account. The first control information may include a key control value for controlling a device so that the device performs the operation.

The control method may further include storing the first user personal account information received from a server. The logging in to the first user personal account may include extracting the first user personal account information included in the first control message, comparing the extracted first user personal account information with the stored first user personal account information, and logging in to the first user personal account if, as a result of the comparison, the extracted first user personal account information is found to be identical with the stored first user personal account information.

The control method may further include, after performing the operation corresponding to the first control information, receiving a second control message, including second user personal account information and second control information, from a second terminal, logging out from the first user personal account and logging in to a second user personal account corresponding to the second user personal account information, based on the second user personal account information included in the second control message, and performing an operation corresponding to the second control information based on second user service policy information associated with the second user personal account.

The control method may further include, after performing the operation corresponding to the first control information, receiving a third control message, including the first user personal account information and third control information, from the first terminal, maintaining a current login state based on the first user personal account information included in the third control message, and performing an operation corresponding to the third control information based on the first user service policy information.

The control method may further include, after performing the operation corresponding to the first control information, receiving a fourth control message including fourth control information from a third terminal, checking that user personal account information is not included in the fourth control message, and logging out from the first user personal account based on the check.

The control method may further include performing an operation corresponding to the fourth control information based on family policy information associated with a predetermined family account after logging out from the first user personal account.

The control method may further include receiving family account information from a server upon initial activation, storing the family account information, and registering the received first user personal account information as an individual account associated with the family account information when the first user personal account information is received from the server.

In accordance with another aspect of the present invention, the present invention provides a device operating based on a user personal account. The device includes a terminal communication unit for receiving a first control message, including first user personal account information and first control information, from a first terminal, a login management unit for logging in to a first user personal account corresponding to the first user personal account information based on the first user personal account information included in the first control message, and a control unit for performing an operation corresponding to the first control information based on predetermined first user service policy information associated with the first user personal account.

The first user personal account information may include Identification information for identifying the first user personal account and authentication information for authenticating the first user personal account. The first control information may include a key control value for controlling a device so that the device performs the operation.

The terminal communication unit may receive a second control message, including second user personal account information and second control information, from a second terminal in the state in which the device logs in to the first user personal account. The login management unit may make the device log out from the first user personal account and log in to a second user personal account corresponding to the second user personal account information, based on the second user personal account information included in the second control message. The control unit may perform an operation corresponding to the second control information based on second user service policy information associated with the second user personal account.

The terminal communication unit may receive a third control message, including the first user personal account information and third control information, from the first terminal in the state in which the device logs in to the first user personal account. The login management unit may maintain a current login state based on the first user personal account information included in the third control message. The control unit may perform an operation corresponding to the third control information based on the first user service policy information.

The terminal communication unit may receive a fourth control message including fourth control information from a third terminal in the state in which the device logs in to the first user personal account. The login management unit may check that user personal account information is not included in the fourth control message and makes the device log out from the first user personal account based on the check. The control unit may perform an operation corresponding to the fourth control information based on family policy information associated with a predetermined family account after the logout.

In accordance with yet another aspect of the present invention, the present invention provides a control system based on a user personal account. The control system includes a first terminal for sending a first control message including first user personal account information and first control information and a service device for receiving the first control message, logging in to a first user personal account corresponding to the first user personal account information based on the first user personal account information included in the first control message, and performing an operation corresponding to the first control information based on predetermined first user service policy information associated with the first user personal account.

The first user personal account information may include Identification information for identifying the first user personal account and authentication information for authenticating the first user personal account. The first control information may include a key control value for controlling the service device so that the service device performs the operation.

The control system may further include a second terminal for sending a second control message including second user personal account information and second control information. In this case, when the second control message is received from the second terminal after performing the operation corresponding to the first control information, the service device may log out from the first user personal account and log in to a second user personal account corresponding to the second user personal account information, based on the second user personal account information included in the second control message, and may perform an operation corresponding to the second control information based on second user service policy information associated with the second user personal account.

The first terminal may send a third control message, including the first user personal account information and third control information, to the service device after the service device performs the operation corresponding to the first control information. The service device may maintain a current login state based on the first user personal account information included in the third control message and performs an operation corresponding to the third control information based on the first user service policy information, when the third control message is received.

The control system may further include a third terminal for sending a fourth control message including fourth control information. When the fourth control message including the fourth control information is received from the third terminal after performing the operation corresponding to the first control information, the service device may check that user personal account information is not included in the fourth control message, log out from the first user personal account, and perform an operation corresponding to the fourth control information based on family policy information associated with a predetermined family account.

The control system may further include a server for generating the first user personal account and sending the first user personal account information, corresponding to the generated first user personal account, to the service device.

In accordance with still yet another aspect of the present invention, the present invention provides a control system based on a user personal account. The control system based on a user personal account may include a server for generating N (N is an integer equal to or greater than 1) user personal accounts and sending N pieces of user personal account information and N pieces of user service policy information corresponding to the N user personal accounts; a service device for storing the N pieces of user personal account information and the N pieces of user service policy information from the server; and N terminals corresponding to the N pieces of user personal account information, that is, remote controllers for sending respective control messages for remotely controlling the service device.

When a control message is received from any one of the N terminals, the service device may log in to a user personal account corresponding to user personal account information using user personal account information included in the control message and perform an operation corresponding to control information based on a user service policy information associated with the logged-in user personal account.

The server may generate and manage family profile information, including a family account and family service policy information corresponding to the service device, when the service device is initially activated, include each user personal account associated with the family account in the family profile information and manage the user personal account whenever the user personal account is generated, and send the family profile information to the service device.

The service device may determine whether or not the user personal account information included in the control message is identical with user personal account information about a current log-in user personal account, maintain the current log-in user personal account if, as a result of the determination, it is determined that the user personal account information is identical with user personal account information, and log out from the current log-in user personal account and then log in using the user personal account information included in the control message if, as a result of the determination, it is determined that the user personal account information is identical with user personal account information. When a control message not including a user personal account is received, the service device may log out from the current log-in user personal account.

### Brief Description of the Drawings

FIG. 1 is an exemplary diagram illustrating the concept of a control system based on a user personal account in accordance with an exemplary embodiment of the present invention.
FIG. 2 is a block diagram illustrating the detailed elements of a server unit shown in FIG. 1.
FIG. 3 is a block diagram illustrating the detailed elements of a service device shown in FIG. 1.
FIG. 4 is a flowchart illustrating an operation of the control system based on a user personal account in accordance with an exemplary embodiment of the present invention and shows an example in which the service device is controlled based on a first user personal account.
FIG. 5 is a flowchart illustrating another operation of the control system based on a user personal account in accordance with an exemplary embodiment of the present invention and shows an example in which the service device is controlled based on a first user personal account and a second user personal account.

### Detailed Description of the Embodiments

The present invention may be modified in various ways and implemented to have several embodiments. Specific embodiments of the present invention are illustrated in the drawings and are described in detail in the detailed description. It is however to be noted that the present invention is not intended to be limited to the specific embodiments, but is intended to include all modifications, equivalents, or substitutions which fall within the spirit and technical scope of the present invention.

Terms, such as the first and the second, may be used to describe various elements, but the elements should not be restricted by the terms. The terms are used to only distinguish one element and the other element from each other. For example, a first element may be named a second element without departing from the scope of the present invention. Likewise, a second element may be named a first element. A term 'and/or' includes a combination of a plurality of pertinent and described items or any one of a plurality of pertinent and described items.

When it is said that one element is 'connected to' or 'coupled with' the other element, it should be understood that one element may be directly connected to or coupled with the other element, but a third element may exist between the two elements. In contrast, when it is said that one element is 'directly connected to' or 'directly coupled with' the other element, it should be understood that a third element does not exist between the two elements.

Terms used in this application are used to only describe the specific embodiments and are not intended to restrict the present invention. An expression of the singular number includes an expression of the plural number unless clearly defined otherwise in the context. In this application, terms, such as 'comprise' or 'have', are intended to designate that characteristics, numbers, steps, operations, elements, or parts which are described in the specification, or a combination of them exist, and should not be understood that they exclude the existence or possible addition of one or more other characteristics, numbers, steps, operations, elements, parts, or combinations of them in advance.

All terms used herein, unless otherwise defined, have the same meanings as those typically understood by those having ordinary skill in the art. The terms, such as ones defined in common dictionaries, should be interpreted to have the same meanings as terms in the context of pertinent technology, and should not be interpreted to have ideal or excessively formal meanings unless clearly defined in the specification.

Hereinafter, some exemplary embodiments of the present invention are described in detail with reference to the accompanying drawings. In describing the present invention, in order to help general understanding, the same reference numerals designate the same elements throughout the drawings and a redundant description of the same elements is omitted.

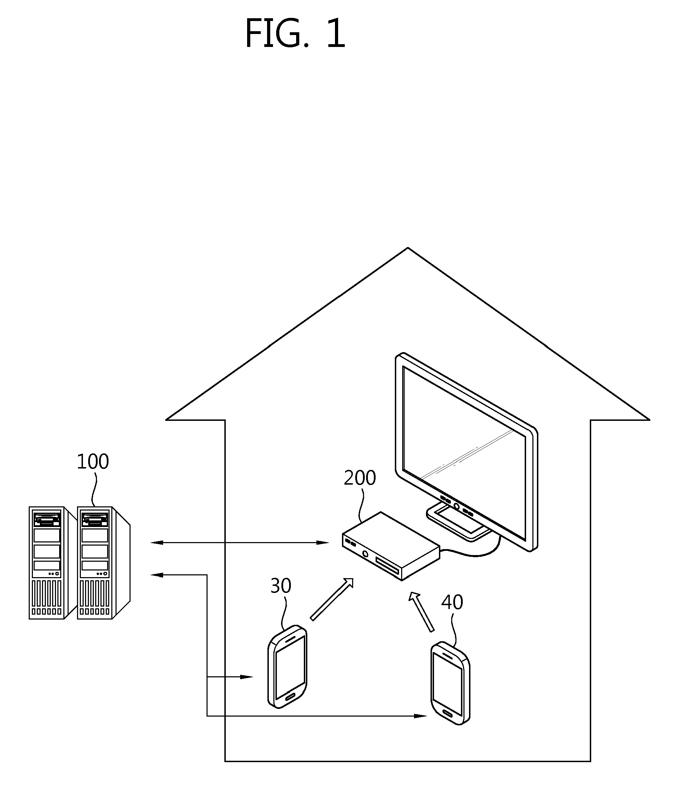

FIG. 1 is an exemplary diagram illustrating the concept of a control system based on a user personal account in accordance with an exemplary embodiment of the present invention.

As shown in FIG. 1, the control system based on a user personal account in accordance with an exemplary embodiment of the present invention may include a server unit 100, a service device 200, and a plurality of terminals 30 and 40.

The server unit 100 can provide IPTV service, such as broadcasting programs, Video on Demand (VoD) service, and supplementary services. The server unit 100 may generate, store, send, and manage a family account corresponding to the service device 200 and at least one user personal account included in the family account.

The service device 200 is a device for providing IPTV service within a home and may be, for example, a set-top box or a smart TV set which is included in a home. The service device 200 may communicate with the server unit 100 through the Internet, and the service device 200 may be controlled by at least one terminal having a wireless remote control function. The service device 200 may manage family account information, family service policy information, and at least one user personal account information and user service policy information dependent on family account information from the server unit 100.

That is, the service device 200 can support a multi-profile service. For example, the service device 200 may manage a family account including at least one user personal account. The service device 200 may operate based on a user personal account. For example, the service device 200 may perform an operation specific to each user personal account based on first user personal account information or second user personal account information included in a control message that is received from the first terminal 30 corresponding to a first user personal account or the second terminal 40 corresponding to a second user personal account.

In the present embodiment, the number of user personal accounts within one family account has been illustrated as being two (i.e., the first user personal account and the second user personal account), but the present invention is not limited thereto. The number of user personal accounts within one family account may be 3 or more depending on an implementation environment. That is, the number of user personal accounts within a family account may be N (N is an integer equal to or greater than 1).

The at least one terminal (e.g., the first terminal 30 corresponding to the first user personal account and the second terminal 40 corresponding to the second user personal account in the present embodiment) may be a terminal having a remote controller function. For example, each of the first terminal 30 and the second terminal 40 may be a smart phone or a Personal Digital Assistant (PDA) having a remote controller application for controlling the service device 200 installed therein or may be a dedicated remote controller for controlling the service device 200 having an arithmetic operation processing function, for example, a dedicated remote controller for controlling a set-top box or smart TV.

The first terminal 30 and the second terminal 40 can include the first user personal account and the second user personal account in respective control messages for instructing the service device 200 to perform operations and send the control messages. That is, each of the first terminal 30 and the second terminal 40 sends a user personal account corresponding to each terminal to the service device 200 along with the control information.

The elements of the control system are described in detail below.

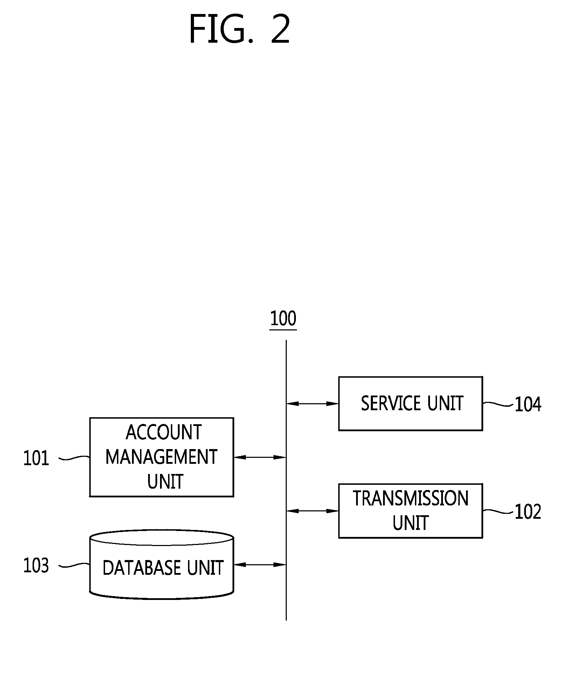

FIG. 2 is a block diagram illustrating the detailed elements of the server unit 100 shown in FIG. 1.

As shown in FIG. 2, the server unit 100 may include a service unit 104, an account management unit 101, a transmission unit 102, and a database unit 103. At least one of the units of the server unit 100 may be implemented through one computer or a plurality of computer terminals, and the units of the server unit 100 can exchange data while communicating with each other.

The service unit 104 can provide IPTV service to the service device 200 through the Internet. For example, the service unit 104 can send an Electronic Program Guide (EPG) to the service device 200 and send content, requested by the service device 200, to the service device 200 using a streaming method or a download method. Furthermore, the service unit 104 may provide various types of supplementary services, such as game, e-commerce, and banking, to the service device 200. Service provided by the service unit 104 may be limited based on service policy information managed by the account management unit 101.

The account management unit 101 can perform a function of generating and managing a family account for IPTV service and information related to a user personal account. For example, when the service device 200 is initially activated, the account management unit 101 may generate a family account corresponding to the service device 200 and generate and manage family service policy information corresponding to the family account. The account management unit 101 may send family account information and family service policy information to the service device 200. The service device 200 can manage family account information and family service policy information received from the account management unit 101.

The account management unit 101 can generate a user personal account based on information received from the terminal of a user. The account management unit 101 can generate and manage user service policy information associated with the generated user personal account. For example, the account management unit 101 may generate a first user personal account and first user service policy information corresponding to the first user personal account, in response to a first user. Furthermore, the account management unit 101 may generate a second user personal account and second user service policy information corresponding to the second user personal account, in response to a second user. The account management unit 101 may send user personal account information and user service policy information, corresponding to each user personal account, to the service device 200.

The account management unit 101 may manage a user account management webpage on a web in order to receive information necessary to generate a user personal account from the terminal of a user. The user account management webpage can provide a user interface through which a user can generate his or her user personal account and set pieces of related information on the web. The terminal of a user which accesses the user account management webpage may be, for example, the first terminal 30 of a first user or the second terminal 40 of a second user or may be a third terminal. That is, the terminal of a user which accesses the server unit 100 in order to set a user personal account may be all types of terminals which can access a webpage through the Internet and input information, such as a PC, a laptop, or a smart phone.

The account management webpage can request user personal account Identification information, authentication information for authenticating a user personal account, and service device Identification information from an accessed user terminal and receive user personal account Identification information, authentication information, and service device Identification information from accessed user terminal.

The account management unit 101 generates a user personal account using user personal account Identification information and authentication information received from the terminal of a user. The user personal account Identification information may be the identifier (ID) of a personal account. The authentication information may be a password, a certificate, fingerprint information, or PIN code.

The service device Identification information may mean Identifier unique to the service device 200, which can uniquely identify the service device 200, such as a model number or a Media Access Control (MAC) value of the service device 200. The service device Identification information may be associated with the user personal account and stored and managed by the database unit 103 of the server unit 100.

Here, a user personal account having the same service device Identification information may be bound to a family account and managed. For example, if a first user personal account and a second user personal account are associated with the same service device Identification information, the account management unit 101 may include the first user personal account and the second user personal account in the same family account and manage the first user personal account and the second user personal account.

When a user personal account is generated, the account management unit 101 can generate user service policy information associated with the generated user personal account. The database unit 103 of the server unit 100 can store and manage the generated user service policy information. To this end, a user account management webpage managed by the account management unit 101 may provide a user interface through which a user can set a personal configuration specific to the user when receiving IPTV service.

For example, the user interface may enable a user to set a desired EPG format, an EPG information display range, interested programs, an IPTV service user interface type, and a program watch range in various ways. The account management unit 101 can generate user service policy information based on personal configurations set by a user. The user service policy information may include a license and age limits corresponding to a user personal account in addition to personal configurations set by a user. The generated user service policy information may be associated with a user personal account and stored and managed by the database unit 103 of the server unit 100.

The transmission unit 102 can send user personal account information and user service policy information, corresponding to each user personal account generated by the account management unit 101, to the service device 200. Each piece of user personal account information may include user personal account Identification information and authentication information necessary to authenticate the user personal account Identification information. The user personal account Identification information of the user personal account information may be an ID that was used to generate a user personal account. The authentication information may be, for example, PIN code or a password, a certificate, or fingerprint information that was used to generate a user personal account.

The service device 200 can register each piece of user personal account information and user service policy information corresponding to the piece of user personal account information, received from the server unit 100, as an individual user personal account within a family account and perform multi-profile management based on the registered user personal account information and user service policy information.

For example, if first user personal account information and first user service policy information have been received from the server unit 100, the service device 200 may register a first user personal account as an individual account associated with a family account corresponding to the service device 200 and manage the first user personal account information and the first user service policy information in association with the first user personal account.

For another example, if second user personal account information and second user service policy information have been received from the server unit 100, the service device 200 may add a second user personal account to an individual account associated with a family account corresponding to the service device 200 and manage the second user personal account information and the second user service policy information in association with the second user personal account.

The detailed elements of the service device 200 are described below.

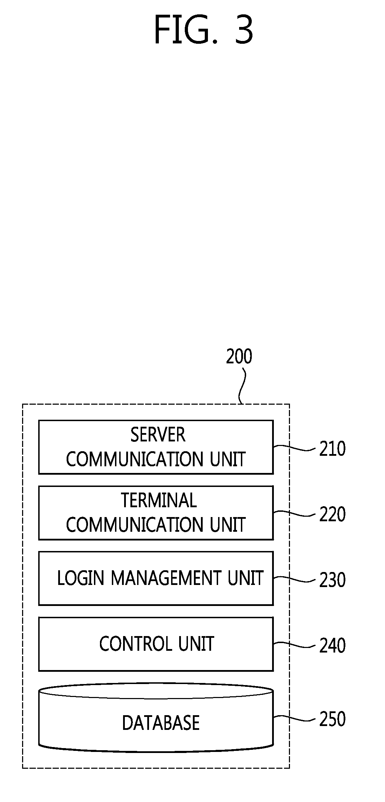

FIG. 3 is a block diagram illustrating the detailed elements of the service device 200 shown in FIG. 1.

The service device 200 may be, for example, a set-top box or smart TV capable of receiving an EPG from the server unit 100 and providing IPTV service for requesting and receiving content, real-time broadcasting programs, and supplementary services based on the EPG. As shown in FIG. 3, the service device 200 may include a server communication unit 210, a terminal communication unit 220, a login management unit 230, a control unit 240, and a database 250. The service device 200 may further include various elements for providing IPTV service, but a description of elements not directly related to the gist of the present invention is omitted.

The server communication unit 210 can perform a function of communicating with the server unit 100 through the Internet. For example, when the service device 200 is initially activated, the server communication unit 210 can receive family account information and family service policy information from the server unit 100. Furthermore, the server communication unit 210 can receive user personal account information and user service policy information, generated whenever a new user personal account is generated, from the server unit 100. The user personal account information, the user service policy information, the family account information, and the family service policy information received by the server communication unit 210 can be stored in the database 250 of the service device 200 under the control of the control unit 240.

The terminal communication unit 220 can receive a control message from at least one terminal having a remote controller function, for example, the first terminal 30 or the second terminal 40. For example, the terminal communication unit 220 can receive a control message for controlling a service control message from the first terminal 30. The control message received from the first terminal 30 may include control information for controlling the operation of the service device 200 and first user personal account information. Furthermore, the terminal communication unit 220 may receive a control message for controlling a service control message from the second terminal 40. The control message received from the second terminal 40 may include control information for controlling the operation of the service device 200 and second user personal account information.

The login management unit 230 can perform a function of logging in to the service device 200 as a user personal account corresponding to user personal account information included in a control message that is received through the terminal communication unit 220. For example, if a control message including first user personal account information and specific control information is received from the first terminal 30, the login management unit 230 can compare the first user personal account information, included in the received control message, with pieces of user personal account information previously stored in the database 250 and log in to a first user personal account if, as a result of the comparison, the first user personal account information included in the control message is found to be user personal account information previously stored in the database 250. Furthermore, if a control message including second user personal account information and control information is received from the second terminal 40, the login management unit 230 can compare the second user personal account information, included in the control message, with pieces of user personal account information previously stored in the database 250 and log in to a second user personal account if, as a result of the comparison, the control message received from the second terminal 40 is found to correspond to the second user personal account.

When a new control message is received through the terminal communication unit 220, the login management unit 230 can confirm user personal account information included in the new control message and determines whether or not the confirmed user personal account information is the same as user personal account information about a current log-in user personal account. If, as a result of the determination, it is determined that the confirmed user personal account information is the same as the user personal account information, the login management unit 230 may maintain a current log-in user personal account. If, as a result of the determination, it is determined that the confirmed user personal account information is not the same as the user personal account information, the login management unit 230 may log out from a current log-in user personal account and then log in using user personal account information included in a currently received new control message.

For example, in the state in which the login management unit 230 has logged in as a first user personal account, the login management unit 230 can confirm user personal account information included in a control message that has been newly received through the terminal communication unit 220. Here, if the confirmed user personal account information is first user personal account information, the login management unit 230 can maintain a current login state because the current log-in account is the same as the first user personal account. In contrast, if the confirmed user personal account information is second user personal account information, the login management unit 230 may log out from the first user personal account and log in to a second user personal account because the current log-in account is different from the second user personal account.

The login management unit 230 can determine whether or not user personal account information has been included in a control message newly received through the terminal communication unit 220 and log out if, as a result of the determination, user personal account information is not included in the newly received control message. For example, in the state in which the login management unit 230 has logged in as a first user personal account, the login management unit 230 can determine whether or not user personal account information has been included in a control message newly received through the terminal communication unit 220 and log out from the current log-in first user personal account if, as a result of the determination, it is determined that user personal account information is not included in the newly received control message. After the logout, the login management unit 230 may consider the state of the service device 200 as a state in which the service device 200 has logged in to a family account. That is, the login management unit 230 may manage a family account login state as a default state.

The control unit 240 can perform an operation, corresponding to control information, in response to user service policy information corresponding to a current log-in user personal account based on a login state that is managed by the login management unit 230. That is, the control unit 240 performs an operation indicated in a control message based on user service policy information corresponding to user personal account information included in a control message that is received from the terminal 30 or 40 for performing remote control. To this end, the control unit 240 can manage a table which includes control information and an operation guide corresponding to the control information.

For example, if a first user personal account has logged in, the control unit 240 can perform an operation corresponding to control information according to a first user service policy corresponding to the first user personal account. That is, an operation corresponding to a command indicated in a control message received from the first terminal 30 (i.e., a command according to the control message including first user personal account information) is performed according to first user service policy information corresponding to the first user personal account. Furthermore, if a second user personal account has logged in, the control unit 240 can perform an operation corresponding to control information according to a second user service policy corresponding to the second user personal account. That is, an operation corresponding to a command indicated in a control message received from the second terminal 40 (i.e., a command according to the control message including second user personal account information) is performed according to second user service policy information corresponding to the second user personal account. If all user personal accounts have logged out, the control unit 240 can perform an operation according to control information based on family service policy information corresponding to a family account.

A plurality of terminals for remotely controlling the service device 200, for example, the first terminal 30 and the second terminal 40 in the present embodiment may be remote controllers used by a first user and a second user, respectively. Here, the remote controller may be a smart phone having a remote controller application installed therein or a personal-dedicated remote controller having an arithmetic operation function.

The first terminal 30 and the second terminal 40 can store first user personal account information and second user personal account information, respectively. To this end, each of the first terminal 30 and the second terminal 40 can display a user interface through which user personal account information can be inputted and store the inputted user personal account information.

If the first user selects a key button of the first terminal 30 in order to control the service device 200, the first terminal 30 can send a control message, including control information corresponding to the key button and first user personal account information that has been previously stored, to the service device 200. Likewise, if the second user selects a key button of the second terminal 40 in order to control the service device 200, the second terminal 40 can send a control message, including control information corresponding to the key button and second user personal account information that has been previously stored, to the service device 200.

The control system based on a user personal account in accordance with an exemplary embodiment of the present invention has been described above. In accordance with the control system based on a user personal account in accordance with an exemplary embodiment of the present invention, a user who watches IPTV through the service device 200 within a home, for example, a first user can be provided with service specific to the first user because the first user registers a first user personal account through a webpage provided by the server unit 100, registers first user personal account information with the first terminal 30, that is, his or her terminal, and then automatically log in to the first user personal account by only controlling the service device 200 through the first terminal 30. Accordingly, the first user does not need to input additional information in order to log in to the service device 200 using his or her personal account.

Furthermore, if a second user controls the service device 200 using his or her terminal in the state in which the service device 200 has logged in to a first user personal account, the first user personal account is automatically logged out and a second user personal account is automatically logged in. Accordingly, a first user does not need to input an additional logout command after watching first IPTV, and the second user can be provided with service specific to the second user because the second user automatically logs in to the second user personal account even without inputting additional login information.

Furthermore, if a third user controls the service device 200 through another remote controller whose user personal account information has not been registered in the state in which service device 200 has logged in to a first user personal account, the first user personal account is automatically logged out, and a current login state automatically shifts to a family account login state. Accordingly, a first user does not need to input an additional logout command after watching first IPTV, and the third user can be provided with service in a family account.

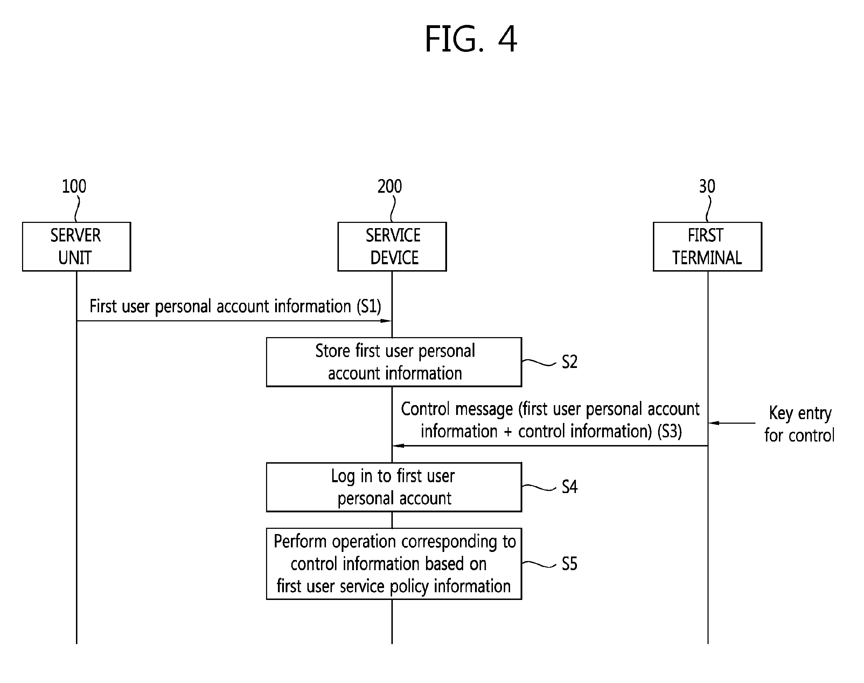

FIG. 4 is a flowchart illustrating an operation of the control system based on a user personal account in accordance with an exemplary embodiment of the present invention and shows an example in which the service device 200 is controlled based on a first user personal account.

As shown in FIG. 4, first, the first user may access a user account management webpage managed by the server unit 100 using a web access terminal, such as his or her PC or smart phone, and input information necessary to generate a first user personal account. The inputted information may include user personal account Identification information (e.g., a user personal account ID), authentication information for identifying a user personal account (e.g., a password, PIN code, a certificate, or fingerprint information), and service device Identification information (e.g., MAC information, a model number, or a serial number for the service device 200). In response thereto, the server unit 100 can generate the first user personal account corresponding to the first user.

When the first user personal account is generated, the server unit 100 can identify the service device 200 based on the inputted service device Identification information and send first user personal account information, corresponding to the first user personal account, to the service device 200 at step S1. The first user personal account information may include the user personal account Identification information and the authentication information. For example, the first user personal account information may include a user personal account ID and PIN code.

The service device 200 may store the first user personal account information received from the server unit 100 at step S2. The first user personal account information may be registered and managed as an individual account in a family account that is stored and managed by the service device 200.

Furthermore, the first user may access the user account management webpage using a web access terminal and input a desired EPG format, an EPG information display range, interested programs, and an IPTV service user interface. In response thereto, the server unit 100 may generate first user service policy information, corresponding to the first user personal account, based on the inputted information and send the first user service policy information to the service device 200. The service device 200 may receive the first user service policy information from the server unit 100 and store the first user service policy information in association with the first user personal account information.

On the other hand, the first user may input the first user personal account information through a user interface provided by the first terminal 30. In response thereto, the first terminal 30 may store the first user personal account information.

While watching IPTV, the first user may select a button of the first terminal 30 in order to control the service device 200. For example, the first user may select a button 'EPG MENU DISPLAY' in the first terminal 30. In response thereto, the first terminal 30 may send a control message including control information according to the selection, that is, a key control value and the previously stored first user personal account information, to the service device 200 at step S3.

When the control message is received from the first terminal 30, the service device 200 may log in to the first user personal account, corresponding to the first user personal account information, based on the first user personal account information included in the control message at step S4. For example, the service device 200 may compare user personal account information, included in the control message, with first user personal account information included in family profile information and log in to the first user personal account if, as a result of the comparison, the user personal account information included in the control message is found to be the first user personal account information included in the family profile information.

Next, the service device 200 can perform an operation corresponding to the control information based on the first user service policy information associated with the first user personal account at step S5. For example, if the control information is a key control value that instructs 'EPG MENU DISPLAY', the service device 200 may display an EPG menu specific to the first user based on the first user service policy information associated with the first user service policy information.

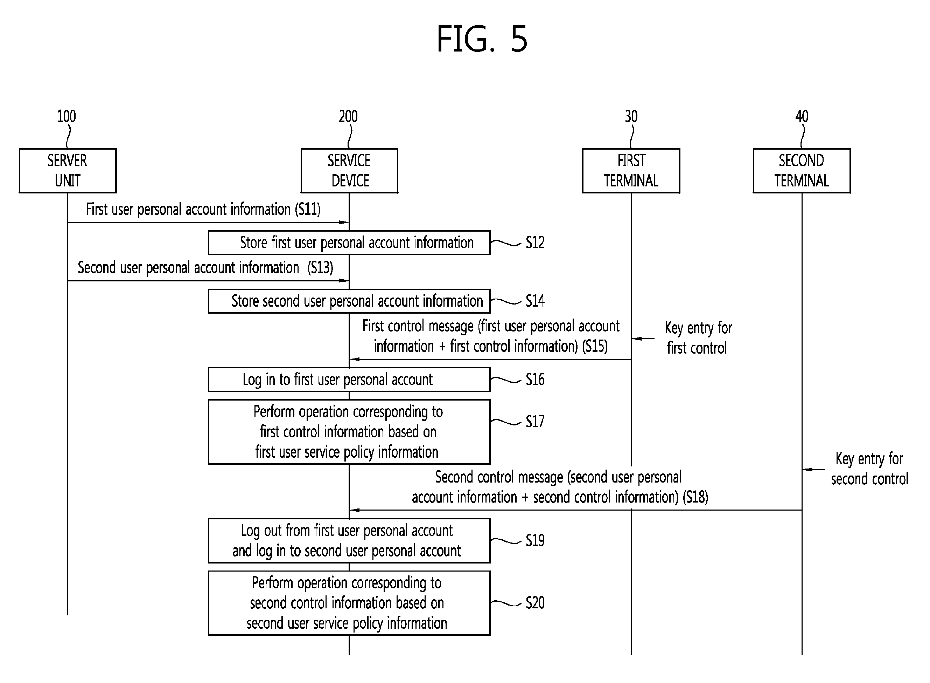

FIG. 5 is a flowchart illustrating another operation of the control system based on a user personal account in accordance with an exemplary embodiment of the present invention and shows an example in which the service device 200 is controlled based on a first user personal account and a second user personal account.

As shown in FIG. 5, first, a first user may access a user account management webpage, managed by the server unit 100, using a web access terminal, such as his or her PC or smart phone, and input information necessary to generate a first user personal account. As described above, the inputted information may include user personal account Identification information for the first user personal account, authentication information for identifying a user personal account, and service device Identification information. In response thereto, the server unit 100 may generate the first user personal account corresponding to the first user.

When the first user personal account is generated, the server unit 100 can identify the service device 200 based on the inputted service device Identification information and send first user personal account information corresponding to the first user personal account to the service device 200 at step S11. The first user personal account information may include the user personal account Identification information and the authentication information. For example, the first user personal account information may include a user personal account ID and PIN code corresponding to the first user.

The service device 200 may store the first user personal account information received from the server unit 100 at step S12. The first user personal account information may be registered and managed as an individual account associated with a family account that is stored and managed by the service device 200.

Furthermore, the first user may access the user account management webpage using the web access terminal and input a desired EPG format, an EPG information display range, interested programs, and an IPTV service user interface. In response thereto, the server unit 100 can generate first user service policy information corresponding to the first user personal account based on the inputted information and send the first user service policy information to the service device 200. The service device 200 can receive the first user service policy information from the server unit 100 and store the first user service policy information in association with the first user personal account information.

Furthermore, a second user may access a user account management webpage managed by the server unit 100 using a web access terminal, such as his or her PC or smart phone, and input information necessary to generate a second user personal account. The inputted information may include user personal account Identification information for a second user personal account, authentication information for identifying a user personal account, and service device Identification information. In response to the input information, the server unit 100 can generate the second user personal account corresponding to the second user.

When the second user personal account is generated, the server unit 100 can identify the service device 200 based on the inputted service device Identification information and send second user personal account information, corresponding to the second user personal account, to the service device 200 at step S13. The second user personal account information may include the user personal account Identification information and the authentication information. For example, the second user personal account information may include a user personal account ID and PIN code corresponding to the second user.

The service device 200 may store the second user personal account information received from the server unit 100 at step S14. The second user personal account information may be registered and managed as an individual account associated with the family account that is stored and managed by the service device 200. That is, the first user personal account information and the second user personal account information may be registered and managed as the individual accounts of the family account.

Furthermore, the second user may access the user account management webpage using the web access terminal and input a desired EPG format, an EPG information display range, interested programs, and an IPTV service user interface. In response thereto, the server unit 100 can generate second user service policy information corresponding to the second user personal account based on the inputted information and send the second user service policy information to the service device 200. The service device 200 can receive the second user service policy information from the server unit 100 and store the second user service policy information in association with the second user personal account information.

Furthermore, the first user may input the first user personal account information through a user interface provided by his or her first terminal 30. In response thereto, the first terminal 30 stores the inputted first user personal account information. Likewise, the second user may input the second user personal account information through a user interface provided by his or her second terminal 40. In response thereto, the second terminal 40 stores the inputted second user personal account information.

While watching IPTV, the first user may select a button of the first terminal 30 in order to control the service device 200. For example, the first user may select a button 'EPG MENU DISPLAY' in the first terminal 30. In response thereto, the first terminal 30 sends a first control message, including first control information according to the selection, that is, a first key control value and the first user personal account information that has been previously stored, to the service device 200 at step S15.

When the first control message is received from the first terminal 30, the service device 200 log in to the first user personal account, corresponding to the first user personal account information, based on the first user personal account information included in the first control message at step S16. For example, the service device 200 may check that user personal account information included in the first control message is the first user personal account information by comparing the user personal account information, included in the first control message, with pieces of user personal account information stored in the database 250 and then log in to the first user personal account.

Next, the service device 200 performs an operation corresponding to the first control information based on the first user service policy information associated with the first user personal account at step S17. For example, if the first control information is a key control value that instructs 'EPG MENU DISPLAY', the service device 200 may display an EPG menu specific to the first user based on the first user service policy information associated with the first user service policy information.

Meanwhile, while the first user vacates his or her seat in the state in which the service device 200 has logged in to the first user personal account, the second user may select a button of the second terminal 40 in order to control the service device 200. For example, the second user may select a button 'INTERESTED PROGRAM LIST DISPLAY' in the second terminal 40. In response thereto, the second terminal 40 may send a second control message including second control information according to the selection, that is, a second key control value and the second user personal account information that has been previously stored, to the service device 200 at step S18.

When the second control message is received from the second terminal 40, the service device 200 log out from the first user personal account and log in to the second user personal account corresponding to the second user personal account information, based on the second user personal account information included in the second control message at step S19. For example, the service device 200 may check that user personal account information included in the second control message is the second user personal account information by comparing the user personal account information, included in the second control message, with pieces of user personal account information stored in the database 250. Here, the service device 200 may log out from the first user personal account and log in to the second user personal account because the second user personal account is different from the current login account, that is the first user personal account.

Next, the service device 200 performs an operation corresponding to the second control information based on the second user service policy information associated with the second user personal account at step S20. For example, if the second control information is a key control value that instructs 'INTERESTED PROGRAM LIST DISPLAY', the service device 200 may display the interested program list of the second user personal account based on the second user service policy information associated with the second user service policy information. Accordingly, the first user does not need to perform an additional logout process, and the second user can be provided with service specific to the second user even without inputting additional information for relating a login process.

Meanwhile, in the state in which the service device 200 has logged in to the first user personal account, the first user may select another button of the first terminal 30 in order to control the service device 200. For example, after step 17 is performed, the first user may select a cursor movement key in order to select a desired item in an EPG menu that is being displayed. In response thereto, the first terminal 30 may send a third control message including third control information according to the selection, that is, a third key value and the first user personal account information that has been previously stored, to the service device 200.

When the third control message is received from the first terminal 30, the service device 200 may maintain the current login state based on the first user personal account information included in the third control message and perform an operation corresponding to the third control information based on the first user service policy information.

Meanwhile, in the state in which the service device 200 has logged in to the first user personal account, the third user may select a button of a third terminal, that is, a common remote controller(that is, a nonregistered remote controller), in order to control the service device 200. For example, after step 17 is performed, the third user may select 'CURSOR MOVEMENT KEY' in order to select a desired item in an EPG menu that is being displayed while the first user vacates his or her seat. In response thereto, the third terminal may send a fourth control message including fourth control information according to the selection, that is, a fourth key value, to the service device 200.

In such a case, when the fourth control message is received from the third terminal, the service device 200 may check that any user personal account information is not included in the fourth control message, log out from the first user personal account, and perform an operation according to the third control information in the family account, that is, a default account.

For example, assuming that control information included in the fourth message is a cursor movement key value that instructs a cursor to be moved in an EPG menu that is displayed only in the first user personal account, the service device 200 may display an error message reading 'CURSOR CANNOT BE MOVED TO CORRESPONDING ITEM BECAUSE CURRENT ACCOUNT IS NOT A LEGITIMATE ACCOUNT' and display the EPG menu in the family account. Accordingly, although the first user vacates his or her seat without additional logout, restriction can be imposed so that another user cannot be provided with service specific to only the first user.

As described above, in accordance with the present invention, the operation of a device, such as a smart TV or IPTV set-top box capable of providing family profile service for the members of a family, such as a home, can be easily controlled without additional login and logout processes by a user based on an individual user personal account using a remote controller or a wireless terminal having a remote controller function.

Although the embodiments of the present invention have been described above, a person having ordinary skill in the art will appreciate that the present invention may be modified in various ways without departing from the spirit and scope of the present invention defined in the appended claims. Accordingly, a possible change of the embodiments of the present invention is deemed to fall within the technology of the present invention.

## Claims

1. A control method based on a user personal account, comprising
receiving a first control message, comprising first user personal account information and first control information, from a first terminal;
logging in to a first user personal account corresponding to the first user personal account information based on the first user personal account information included in the first control message; and
performing an operation corresponding to the first control information based on predetermined first user service policy information associated with the first user personal account.

2. The control method of claim 1, wherein:
the first user personal account information comprises Identification information for identifying the first user personal account and authentication information for authenticating the first user personal account, and
the first control information comprises a key control value for controlling a device so that the device performs the operation.

3. The control method of claim 1, further comprising storing the first user personal account information received from a server, wherein the logging in to the first user personal account comprises:
extracting the first user personal account information included in the first control message;
comparing the extracted first user personal account information with the stored first user personal account information; and
logging in to the first user personal account if, as a result of the comparison, the extracted first user personal account information is found to be identical with the stored first user personal account information.

4. The control method of claim 1, further comprising:
after performing the operation corresponding to the first control information,
receiving a second control message, comprising second user personal account information and second control information, from a second terminal;
logging out from the first user personal account and logging in to a second user personal account corresponding to the second user personal account information, based on the second user personal account information included in the second control message; and
performing an operation corresponding to the second control information based on second user service policy information associated with the second user personal account.

5. The control method of claim 1, further comprising:
after performing the operation corresponding to the first control information,
receiving a third control message, comprising the first user personal account information and third control information, from the first terminal;
maintaining a current login state based on the first user personal account information included in the third control message; and
performing an operation corresponding to the third control information based on the first user service policy information.

6. The control method of claim 1, further comprising:
after performing the operation corresponding to the first control information,
receiving a fourth control message comprising fourth control information from a third terminal;
checking that user personal account information is not included in the fourth control message; and
logging out from the first user personal account based on the check.

7. The control method of claim 6, further comprising performing an operation corresponding to the fourth control information based on family policy information associated with a predetermined family account after logging out from the first user personal account.

8. The control method of claim 1, further comprising:
receiving family account information from a server upon initial activation;
storing the family account information; and
registering the received first user personal account information as an individual account associated with the family account information when the first user personal account information is received from the server.

9. A device operating based on a user personal account, comprising:
a terminal communication unit for receiving a first control message, comprising first user personal account information and first control information, from a first terminal;
a login management unit for logging in to a first user personal account corresponding to the first user personal account information based on the first user personal account information included in the first control message; and
a control unit for performing an operation corresponding to the first control information based on predetermined first user service policy information associated with the first user personal account.

10. The device of claim 9, wherein:
the first user personal account information comprises Identification information for identifying the first user personal account and authentication information for authenticating the first user personal account, and
the first control information comprises a key control value for controlling a device so that the device performs the operation.

11. The device of claim 9, wherein
the terminal communication unit receives a second control message, comprising second user personal account information and second control information, from a second terminal in a state in which the device logs in to the first user personal account,
the login management unit makes the device log out from the first user personal account and log in to a second user personal account corresponding to the second user personal account information, based on the second user personal account information included in the second control message; and
the control unit performs an operation corresponding to the second control information based on second user service policy information associated with the second user personal account.

12. The device of claim 9, wherein:
the terminal communication unit receives a third control message, comprising the first user personal account information and third control information, from the first terminal in a state in which the device logs in to the first user personal account,
the login management unit maintains a current login state based on the first user personal account information included in the third control message, and
the control unit performs an operation corresponding to the third control information based on the first user service policy information.

13. The device of claim 9, wherein:
the terminal communication unit receives a fourth control message comprising fourth control information from a third terminal in a state in which the device logs in to the first user personal account, and
the login management unit checks that user personal account information is not included in the fourth control message and makes the device log out from the first user personal account based on the check.

14. The device of claim 13, wherein the control unit performs an operation corresponding to the fourth control information based on family policy information associated with a predetermined family account after the logout.

15. A control system based on a user personal account, comprising:
a first terminal for sending a first control message comprising first user personal account information and first control information; and
a service device for receiving the first control message, logging in to a first user personal account corresponding to the first user personal account information based on the first user personal account information included in the first control message, and performing an operation corresponding to the first control information based on predetermined first user service policy information associated with the first user personal account.
